# EUROPÄISCHE PATENTSCHRIFT

(11) **EP 2 540 500 B1**
(45) Veröffentlichungstag und Bekanntmachung des Hinweises auf die Patenterteilung: **26.10.2016**
(21) Anmeldenummer: 11005223.0
(22) Anmeldetag: 28.06.2011
(51) Int. Cl.: B32B 37/06

(54) **Laminationsvorrichtung und -verfahren für Folien mit temperaturempfindlichen Elementen sowie damit hergestellte Dokumente**
Lamination device and method for films with temperature-sensitive elements and documents produced with same
Dispositif et procédé de lamination de feuilles avec éléments thermosensibles, et documents ainsi obtenus

(43) Veröffentlichungstag der Anmeldung: 02.01.2013
(73) Patentinhaber: Actilor Intellectual Asset AG, 7208 Malans (CH)
(72) Erfinder: Ritter, Ulrich, 63667 Nidda-Schwickartshausen (DE); Schindler, Samuel, 74613 Oehringen (DE)
(74) Vertreter: Detken, Andreas

(56) Entgegenhaltungen:
- EP-A2- 0 013 557
- EP-A2- 2 082 894
- WO-A2-2011/085174
- FR-A1- 2 833 514
- GB-A- 1 354 615
- JP-A- 2010 056 005
- US-A1- 2006 169 405

## Beschreibung

### TECHNISCHES GEBIET

Die vorliegende Erfindung betrifft eine Vorrichtung und ein Verfahren zum Aufbringen eines Films auf ein Substrat durch Druck- und Wärmeeinwirkung (Lamination). Die vorgeschlagenen Vorrichtungen und Verfahren eignen sich besonders zum Aufbringen von Filmen, die temperaturempfindliche Elemente enthalten. Beim temperaturempfindlichen Element kann es insbesondere um ein Element handeln, das Bacteriorhodopsin enthält, z.B. um ein Sicherheitsmerkmal oder um ein optisches Datenspeicherelement auf der Basis von Bacteriorhodopsin. Die Vorrichtung und das Verfahren ermöglichen es, dass derartige Elemente nach dem Aufbringen des Films trotz der dazu nötigen Wärmeanwendung ihre Funktion beibehalten oder zumindest nach einer gewissen Zeit wiedererlangen. Sie eignen sich dadurch besonders zur Herstellung von Dokumenten, die hohen Sicherheitsanforderungen genügen müssen, z.B. von Reisepässen. Die vorliegende Erfindung bezieht sich ausserdem auf entsprechend hergestellte Dokumente.

### STAND DER TECHNIK

Viele Datenträger oder Informationsträger, z.B. Ausweiskarten, Personalisierungsseiten für Reisepässe, aber auch Kreditkarten und ähnliche Transaktionskarten müssen eine hohe Fälschungs- und Manipulationssicherheit aufweisen. Im Fall eines Reisepasses beinhaltet eine Personalisierungsseite in der Regel die Daten des Passeigentümers und kann nicht nur die Form eines Inhaberausweises für den Reisepass (sogenannte Datapage oder Holderpage) annehmen, sondern auch z.B. eine Visumsseite sein.

Zur Erhöhung der Fälschungssicherheit können eine Vielzahl von Sicherheitsmerkmalen auf oder in solchen Datenträgern integriert werden. Dazu ist es z.B. aus der EP-A1-1380442 bekannt, derartige Sicherheitsmerkmale in einem Schichtaufbau unterzubringen. Als Sicherheitsmerkmale werden einerseits sichtbare, mit dem blossen Auge verifizierbare Merkmale (sogenannte Erststufenmerkmale oder Level-1-Merkmale) und andererseits bloss mit Hilfsmitteln detektierbare Merkmale (Zweit- und Drittstufenmerkmale) bzw. Level-2- und Level-3-Merkmale) zur Identifizierung und Authentifizierung genutzt. Zum Aufbringen der Sicherheitsmerkmale auf das Dokument ist es eine übliche Praxis, ein Substrat durch ein Laminationsverfahren mit einem transparenten ein- oder mehrschichtigen Film zu versehen. Bei dem Film kann es sich um eine klassische Laminationsfolie handeln, die nach der Lamination vollständig auf dem Substrat verbleibt, es kann sich aber beispielsweise auch um einen in einem Folientransferprozess aufgebrachten sogenannten Dünnfilm handeln. Die so aufgebrachten Schichten können beispielsweise hochwertige Hologramme wie ein Kinegram®, Volumenhologramme, 2D/3D-Hologramme, E-Beam-Hologramme oder andere stereografische Effekte sowie Kombinationen einzelner Varianten enthalten. Weitere visuell erkennbare Sicherheitselemente können auch aus Logos oder Schriftzügen auf der Basis gedruckter oder mit Laserstrahlung sichtbar gemachter Farbkörper (siehe z. B. EP-B1-1230092) bestehen, die durch ihre chemische Natur und das spezielle Aufbringungsverfahren und fallweise durch eine zusätzlich vorgenommene Datenverschlüsselung höchsten Sicherheitsanforderungen genügen können. Natürlich können auch Sicherheitsmerkmale einer anderen Sicherheitsstufe, beispielsweise maschinenlesbare Merkmale (Drittstufen oder Level-3-Merkmale) in den aufgebrachten Schichten implementiert sein.

Im Fall eines Reisepasses wird die Lamination in der Praxis meist auf der ersten Innenseite des Passbuch (Vorsatz) oder auf der vorderen oder rückwärtigen Seite des ersten Blatts vorgenommen. Die Herstellung eines solchen Reisepasses ist in zwei grundsätzliche Schritte unterteilt: Ein erster Schritt ist die Herstellung des Passbuches mit Identifikationsnummer und optional einer ersten Personalisierung auf der Personalisierungsseite im Hinblick auf den späteren Inhaber des Dokumentes. In einem zweiten Schritt wird der im ersten Schritt erstellte Rohling des Passbuches endgültig personalisiert. Dieser letzte Personalisierungsschritt ist oft ein Inkjetdruck oder eine Laserbeschriftung von persönlichen Daten wie zum Beispiel der Name und das Geburtsdatum des späteren Inhabers des Reisepasses. Im Zuge des zweiten Schrittes wird vielfach, insbesondere bei Reisepässen auf höchstem Sicherheitsniveau, der erwähnte Film auf das Dokument aufgebracht, der dann hochwertige Sicherheitsmerkmale und -elemente enthalten kann. Die Sicherheitsmerkmale können optional wiederum personalisierte Daten enthalten. Der aufgebrachte Film lässt die darunter liegenden Substratschicht, die beispielsweise aus Papier oder einem Kunststoff wie Polycarbonat bestehen kann, visuell erkennen und hat für diese gleichzeitig eine Schutz- und Sicherheitsfunktion.

Ein letzter Schritt bei der Fertigung eines Passes oder eines anderen Sicherheitsdokuments ist also in vielen Fällen die Lamination eines transluzenten Films mit den oben genannten Sicherheitselementen und fallweise auch mit persönlichen Daten. Zur Applikation solcher Filme gibt es auf dem Markt dedizierte Geräte, beispielsweise Diletta CPL180HD, Security Printing Consulting SPS AL1200 oder Digital Identification Solutions DISPP380X. Geräte dieses Typs laminieren eine mit einer adhäsiven Beschichtung versehene Folie unter Druck und erhöhter Temperatur über ein Rotations- oder Hubverfahren auf das Substrat auf, nachdem das Dokument an diesen Geräten ausgerichtet, angelegt und in diese eingeführt worden ist. Alternativ kann die Lamination auch adhäsivfrei durchgeführt werden, wobei dann spezielle Folienmaterialien und höhere Temperaturen zur Anwendung kommen.

Im Stand der Technik wird in der Regel angestrebt, die Druck- und Temperaturbedingungen während der Lamination einigermassen konstant zu halten. Dabei ist eine gewisse Inhomogenität der Temperatur über die Ausdehnung des aufzulaminierenden Films hinweg zwar häufig nicht vermeidbar, aber normalerweise unerwünscht. Die erzielbaren Maximaltemperaturen bekannter Geräte bewegen sich zwischen 160 °C und 250 °C, wobei die üblichen Betriebstemperaturen typischerweise etwas niedriger, nämlich meist zwischen 110 °C und 160 °C liegen; bei der adhäsivfreien Lamination mit Folien auf der Basis von Polycarbonat (PC) liegt die Betriebstemperatur allerdings häufig über 180 °C. Temperaturen in diesem Bereich sind materialabhängig nötig, um ein Laminat zu erzeugen, das bezüglich seiner Haftung den Sicherheitsanforderungen genügt. Die WO 95/09084 erwähnt zum Beispiel, dass Laminierbedingungen mit Temperaturen zwischen 120 °C und 150 °C für Zeiten von weniger als einer Minute "niedrige Laminierbedingungen" darstellen. Die EP-A2-1516749 offenbart sogar Temperaturen über 190 °C für den Laminationsprozess.

Der aufgewendete Druck kann ebenfalls erheblich sein. So werden üblicherweise Drücke von über 200 N/cm² und teilweise bis zu über 500 N/cm² eingesetzt (siehe EP-A2-1516749). Für einige druckempfindliche Sicherheitsmerkmale übersteigen die üblichen Druckbedingungen die Maximalwerte für deren Funktionserhalt. Daher werden zum Teil Schutzmassnahmen ergriffen. Beispielsweise werden druckempfindliche RFID-Chips häufig in ein Fenster des Schichtaufbaus eingelassen, so dass der Träger (das Substrat) selbst den Druck abfängt. Ein solcher Fensteraufbau ist zum Beispiel in der WO-A1-01/18748 beschrieben.

Für den Schutz von temperatursensitiven Sicherheitsmerkmalen wie z. B. Retinalproteinen, die sowohl als visuelles als auch als maschinenlesbares Sicherheitsmerkmal eine ausserordentlich hohe Bedeutung haben, gibt es dagegen keine befriedigende Lösung, ein haltbares Laminat unter Funktionserhalt des Retinalproteins zu erzeugen. So geht z.B. aus Messungen der Phasenübergänge eines reinen Bacteriorhodopsin-Purpurmembran-Komplexes (BR-PM) hervor, dass die Grenztemperatur, bei der ein BR-PM-Komplex zumindest vorübergehend (reversibel) seine Funktion verliert, bei ca. 80 °C liegt (Eisenbach et. al., Curr. Top. Membr. Trans. (1979) 12:165-248 und Hiraki et. al., Biochim. Biophys. Acta (1981) 1647:12-28). Eine solch geringe Grenztemperatur erlaubt es nicht, das verlangte Laminat unter Funktionserhalt des BR-PM-Komplexes nach klassischen Methoden herzustellen. Ein weiterer Phasenübergang wird (wie auch bei vielen anderen Proteinen) bei ca. 100 °C beobachtet und ist die Folge einer Denaturierung des BR-PM-Komplexes, was sich durch einen irreversiblen Funktionsverlust des BR-PM enthaltenden Sicherheitsmerkmals äussert. Ab 120 °C setzt schliesslich die thermische Zersetzung des Molekülkomplexes ein. Selbst mit Schutzmassnahmen darf bei der Verarbeitung von Sicherheitsmerkmalen auf der Basis von BR-PM-Komplexen eine Temperatur von ca. 90-100 °C selbst kurzfristig nicht überschritten werden.

Aus der EP 0 013 557 A2 ist ein Verfahren zum Kaschieren von Schichten aus zum Teil thermoplastischen Folien zu einem Verbund durch Wärme- und Druckeinwirkung mittels einer Pressvorrichtung bekannt, wobei die beheizten Platten der Pressvorrichtung über Bereiche mit reduzierter Temperatur verfügen.

Die US 2006/169405 A1 offenbart eine Vorrichtung zum Abdichten von flexiblen Schaltungen mit wärmeempfindlichen Schaltungselementen mittels einer Presse, wobei die Presse über gekühlte sowie beheizte Segmente verfügt.

Eine Laminiervorrichtung mit mehreren selektiv aktivierbaren Erwärmungselementen ist aus der WO 2011/085174 A2 bekannt, welche zum Stand der Technik nach Art. 54(3) EPÜ gehört.

Die EP 2 082 894 A2 offenbart ein Dokument mit einer thermosensitiven Funktionsschicht, in welcher als Farbpigment Bakteriorhodopsin enthalten ist, das beim Bedrucken unter Verwendung eines Thermodruckkopfes eine Schwärzung erzeugt.

Ein Verfahren zur Herstellung eines Formatflächengebildes ist aus der GB 1 354 615 A bekannt, bei dem Druck und optional Wärme auf eine zu laminierende Folie angewendet werden.

Aus der FR 2 833 514 A1 ist eine Vorrichtung zur Laminierung mittels Wärme- und Druckeinwirkung bekannt, wobei die Vorrichtung über eine Halterung für die zu laminierenden Gegenstände aufweist.

Die JP 2010 056005 A offenbart eine Heizplatte, welche Leistungshalbleiter oder - transistoren als Heizelemente aufweist.

### DARSTELLUNG DER ERFINDUNG

Es ist eine Aufgabe der Erfindung, eine Vorrichtung zum Aufbringen eines ein- oder mehrlagigen Films auf ein Substrat unter Temperatur- und Druckanwendung anzugeben, die es ermöglicht, Filme mit temperaturempfindlichen Elementen wie z.B. Sicherheitsmerkmalen auf der Basis des BR-PM-Komplexes aufzubringen, ohne die temperaturempfindlichen Elemente zu zerstören. Diese Aufgabe wird durch eine Vorrichtung mit den Merkmalen des Anspruchs 1 gelöst.

Es wird also eine Vorrichtung zum Aufbringen eines Films auf ein Substrat durch Lamination offenbart, die eine Heizeinrichtung aufweist, um den Film und/oder das Substrat aufzuheizen, und die eine Anpresseinrichtung aufweist, um die Verwendung eines Films oder eines Substrats mit temperaturempfindlichen Elementen zu ermöglichen, ist die Heizeinrichtung dazu ausgebildet, unterschiedliche, vordefinierte Bereiche des Films und/oder des Substrats gezielt unterschiedlichen Temperaturen auszusetzen.

Weitere Ausführungsformen sind in den abhängigen Ansprüchen angegeben.

Die Erfindung ermöglicht es, einen Film derart auf ein Substrat aufzubringen, dass Bereiche des Films und/oder des Substrats, die temperaturempfindliche Elemente enthalten, nicht übermässigen Temperaturen ausgesetzt werden, so dass die Funktion der temperaturempfindlichen Elemente erhalten bleibt. Gleichzeitig ermöglicht es die Erfindung, den Film und das Substrat in Bereichen, die keine temperaturempfindlichen Elemente enthalten, mit hoher Sicherheit dauerhaft miteinander zu verbinden.

Unter Lamination wird in diesem Zusammenhang jedes Verfahren verstanden, bei dem ein ein- oder mehrschichtiger Film unter Druck- und Wärmeeinwirkung auf ein Substrat aufgebracht wird und der Film zumindest bereichsweise dauerhaft mit dem Substrat verbunden wird. Der Film und/oder das Substrat können mit temperatur- und/oder druckaktivierten Adhäsiven versehen sein, solche Adhäsive können aber auch entfallen. Auch sogenannte Transferverfahren, bei denen sich der Film vor der Lamination auf einem Träger befindet, der Film mitsamt Träger auf das Substrat auflaminiert wird, und anschliessend der Träger entfernt wird, werden als Laminationsverfahren verstanden.

Insbesondere kann die Heizeinrichtung derart ausgebildet sein, dass sie einen ersten Bereich des Films und/oder des Substrats vor oder während des Anpressens mindestens einer ersten vorbestimmten Temperatur aussetzt, während sie einen zweiten Bereich des Films und/oder des Substrats vor oder während des Anpressens einer Temperatur aussetzt, die um mindestens 10 °C, vorzugsweise um mindestens 20 °C, besser sogar um mindestens 30 °C oder sogar 40 °C niedriger als die erste Temperatur ist. Die erste Temperatur kann insbesondere genügend hoch gewählt werden, um den Film im ersten Bereich dauerhaft mit dem Substrat zu verbinden. Üblicherweise wird diese Temperatur mindestens 110 °C, vorzugsweise mindestens 120 °C betragen und kann je nach Anwendung auch mindestens 140 °C oder sogar 160 °C betragen, bei der adhäsivfreien Lamination sogar mehr als 180 °C. Für die Anwendung mit BR-PM-Komplexen sollte die zweite Temperatur möglichst geringer als 100 °C, vorzugsweise geringer als 95 °C, besser geringer als 90 °C, besonders bevorzugt geringer als 80 °C sein, um den Funktionserhalt des BR-PM-Komplexes zu gewährleisten. Für andere Arten von temperaturempfindlichen Elementen kann die zweite Temperatur aber auch andere Werte annehmen.

Vorzugsweise umgibt der erste Bereich den zweiten Bereich im Wesentlichen vollständig (in der Ebene des Films betrachtet, also zweidimensional betrachtet). Dadurch wird es insbesondere möglich, einen stabilen Randverbund um das temperaturempfindliche Element herum zu schaffen. Dies sichert die Stabilität des entstandenen Dokuments, selbst wenn die Verbindung zwischen dem Substrat und dem Film im zweiten Bereich weniger dauerhaft sein sollte als diejenige im ersten Bereich.

Aus dem Stand der Technik sind eine Vielzahl verschiedener Bauweisen für Laminiergeräte bekannt, und die Erfindung ist nicht auf eine bestimmte Bauweise beschränkt. Unabhängig von der konkreten Bauweise definiert die Heizeinrichtung eine Heizfläche zum Aufheizen des Films und/oder des Substrats. Die Heizfläche ist vorzugsweise im Wesentlichen eben (d.h. sie definiert eine Hauptebene, aus der allenfalls Elemente hervorstehen können oder in der Vertiefungen eingelassen sein können, wobei aber die Hauptebene selbst nicht gekrümmt ist); die Heizfläche kann aber auch gewölbt sein und insbesondere z.B. die Form einer Walze aufweisen. Die Vorrichtung weist dann vorzugsweise eine Steuereinrichtung auf, welche die Heizeinrichtung derart ansteuert, dass die Heizfläche in einem ersten Bereich mindestens auf eine vorbestimmte erste Temperatur aufgeheizt wird und in einem zweiten Bereich eine Temperatur annimmt, die um mindestens 10 °C, vorzugsweise um mindestens 20 °C niedriger als die erste Temperatur ist. Dabei sind sowohl der erste als auch der zweite Bereich dazu vorgesehen, tatsächlich das Substrat und/oder den Film zu beheizen, es handelt sich also nicht etwa um Randbereiche der Heizfläche, die im normalen Betrieb gar nicht am Laminiervorgang beteiligt sind. Bezüglich der bevorzugten Absolutwerte der ersten und zweiten Temperatur gelten die oben genannten Überlegungen. Insbesondere ist es wiederum bevorzugt, dass der erste Bereich den zweiten Bereich im Wesentlichen vollständig umgibt. Wenn die Heizfläche die Form einer Walze aufweist, ist es zumindest bevorzugt, wenn der erste Bereich quer zur Förderrichtung beidseitig an den zweiten Bereich anschliesst.

Die Heizeinrichtung umfasst nicht nur ein einzelnes Heizelement, sondern eine Mehrzahl von Heizelementen, und die Vorrichtung weist eine Steuereinrichtung auf, um unterschiedliche Heizelemente separat anzusteuern, so dass unterschiedliche Bereiche der Heizfläche gezielt mit unterschiedlichen Flächenheizleistungen beaufschlagbar sind, um so in unterschiedlichen Bereichen der Heizfläche gezielt unterschiedliche Temperaturen zu erzeugen.

Die Heizelemente sind separat voneinander (einzeln oder in zwei oder mehr Gruppen) thermostatisch geregelt, d.h. die Steuereinrichtung weist eine Mehrzahl von Reglern auf, um die Leistung unterschiedlicher Heizelemente separat zu regeln.

Jeweils eines oder mehrere Heizelemente können mit jeweils einem bestimmten Bereich der Heizfläche zusammenwirken, um diesen zu beheizen. Die auf diese Weise separat beheizbaren Bereiche können in einem regelmässigen zweidimensionalen Muster, insbesondere einem matrixförmigen, trigonalen oder hexagonalen Muster, angeordnet sein. Die Bereiche können aber auch unregelmässig angeordnet sein. Wenn die Bereiche in einem Muster angeordnet sind, überdeckt das Muster vorzugsweise im Wesentlichen die gesamte Heizfläche; es kann aber auch nur in einem Teil der Heizfläche vorhanden sein. Auf diese Weise wird es möglich, die Vorrichtung an unterschiedliche Anordnungen von temperaturempfindlichen Elementen anzupassen.

Die Heizelemente können durch Leistungshalbleiter, insbesondere Leistungstransistoren, gebildet sein, deren Abwärme in diesem Fall zum gezielten Heizen verwendet wird. Dazu können die Leistungshalbleiter mit Kühlkörpern verbunden sein, deren Oberflächen jeweils einen Teil der Heizfläche bilden oder die selbst wiederum mit der Heizfläche verbunden sind. Die Leistungshalbleiter können aber auch unmittelbar in den Körper, der die Heizfläche bildet, eingelassen oder mit diesem anderweitig verbunden sein, insbesondere unter Anwendung handelüblicher Wärmeleitpaste. Leistungshalbleiter haben den Vorteil, dass sie auf einfache Weise ansteuer- und regelbar sind und dank ihrer geringen Wärmekapazität eine kurze Reaktionszeit zeigen. Statt Leistungshalbleitern ist es aber auch möglich, übliche ohmsche Widerstände oder andere bekannte Arten von elektrischen Heizelementen, z.B. Heizpatronen, Dickschicht- oder Dünnschichtheizelemente, zu verwenden.

Die Heizfläche besteht wegen der erforderlichen hohen Wärmeleitfähigkeit vorzugsweise aus einem Metall, insbesondere Aluminium, Kupferlegierungen oder andere Materialien mit hoher Wärmeleitfähigkeit. Der Heizfläche ist in der Regel eine Gegenfläche zugeordnet, die gegenüberliegend der Heizfläche angebracht ist und dazu ausgebildet ist, das Substrat und den Film auf die Heizfläche zu pressen. Auch diese Gegenfläche kann eben oder gewölbt sein, insbesondere walzenförmig. Bevorzugt ist diese Gegenfläche jedoch komplementär zur Heizfläche und im Wesentlichen eben. Die Gegenfläche kann grundsätzlich aus Metall, Kunststoff oder beliebigen anderen Materialien bestehen. Um auch bei Unebenheiten der Heizfläche und/oder des zu laminierenden Dokuments eine gleichmässige Verteilung des Anpressdrucks zu gewährleisten, ist es jedoch von Vorteil, wenn die Gegenfläche schmiegsam und vorzugsweise elastisch ist. Sie kann insbesondere pneumatisch mit Luftdruck beaufschlagbar sein, um den erforderlichen Anpressdruck aufzubauen. Dazu kann die Vorrichtung eine entsprechende Druckkammer, die teilweise durch die Gegenfläche begrenzt ist, und einen Kompressor aufweisen. Eine Steuereinrichtung kann dann dazu ausgebildet sein, den Druck in der Druckkammer zu steuern. Die Steuereinrichung kann insbesondere mindestens ein Ventil ansteuern. Unter dem Begriff "schmiegsam" ist zu verstehen, dass die Gegenfläche aufgrund ihrer Materialwahl und sonstigen Ausgestaltung in der Lage ist, sich an Unebenheiten der Heizfläche und der zwischen Heizfläche und Gegenfläche eingelegten Elemente substanziell anzupassen. Als Materialien kommen insbesondere Kunststoffe wie Weich-PVC, PP/EPDM, PU, TPE-E, oder Kautschuk, mit oder ohne Textileinlage in Frage. Der Bereich der Shore-A-Härte solcher Materialien kann z.B. zwischen 20 und 80 liegen, vorzugsweise 30-70, insbesondere bevorzugt 30-50. Der Elastizitätsmodul (auf Zug gemessen) liegt bevorzugt unter 100 MPa, insbesondere im Bereich 0.3-30 MPa, besonders bevorzugt unter 10 MPa oder sogar unter 3 MPa. Eine solche schmiegsame Gegenfläche ist selbst dann von Vorteil, wenn die Heizfläche nicht in unterschiedlichen Bereichen auf unterschiedliche Temperaturen heizbar ist. Die vorliegende Erfindung bezieht sich dementsprechend auch allgemein auf eine Vorrichtung zum Aufbringen eines ein- oder mehrlagigen Films auf einen Träger mittels Lamination, die eine beheizbare Heizfläche und eine der Heizfläche gegenüberliegend angeordnete schmiegsame und vorzugsweise elastische Gegenfläche aufweist, um den Film und das Substrat gemeinsam an die Heizfläche anzupressen.

Gemäss einem zweiten Aspekt stellt die vorliegende Erfindung ein Verfahren zum Versehen eines Substrats mit einem Film durch Lamination zur Verfügung. Dieses Verfahren umfasst die folgenden Schritte:
Bereitstellen des Substrats und des Films; und
Anpressen des Films an das Substrat unter Temperatureinwirkung, wobei unterschiedliche Bereiche des Films und/oder des Substrats während des Anpressens gezielt unterschiedlichen Temperaturen ausgesetzt werden, wobei unterschiedliche Bereiche des Films und/oder des Substrats mittels einer Heizeinrichtung gezielt unterschiedlichen Temperaturen ausgesetzt werden, indem der Film und/oder das Substrat mittels einer durch die Heizeinrichtung definierten Heizfläche erwärmt werden. Die Heizeinrichtung umfasst eine Mehrzahl von Heizelementen, wobei unterschiedliche Heizelemente separat durch eine Steuereinrichtung angesteuert werden, um unterschiedliche Bereiche der Heizfläche gezielt mit unterschiedlichen Flächenheizleistungen zu beaufschlagen. Die Leistung unterschiedlicher Heizelemente wird mittels einer Mehrzahl von unabhängigen Reglern der Steuereinrichtung separat thermostatisch geregelt.

Dieses Verfahren kann mit einer Vorrichtung, wie sie vorstehend angegeben wurde, oder auch mit anderen Vorrichtungen verwirklicht werden. Die oben stehenden Überlegungen im Zusammenhang mit der erfindungsgemässen Vorrichtung gelten sinngemäss gleichermassen für das vorgeschlagene Verfahren. Insbesondere ist es bevorzugt, dass ein erster Bereich des Films und/oder des Substrats während des Anpressens mindestens einer ersten vorbestimmten Temperatur ausgesetzt wird, um den Film im ersten Bereich dauerhaft mit dem Substrat zu verbinden, und dass ein zweiter Bereich des Films und/oder des Substrats während des Anpressens einer Temperatur ausgesetzt wird, die um mindestens 10 °C, vorzugsweise um mindestens 20 °C, je nach Anwendung mindestens 30 °C oder sogar mindestens 40 °C niedriger als die erste Temperatur ist. Die absoluten Temperaturwerte sind dabei vorzugsweise wie oben schon angegeben gewählt.

Das erfindungsgemässe Verfahren eignet sich besonders für Situationen, in denen der Film und/oder das Substrat mindestens ein temperaturempfindliches Element aufweist. Der Film und/oder das Substrat wird dann derart während des Anpressens in unterschiedlichen Bereichen gezielt unterschiedlichen Temperaturen ausgesetzt, dass das temperaturempfindliche Element funktional erhalten bleibt. Wenn das temperaturempfindliche Element ein Retinalprotein, z.B. Bacteriorhodopsin und insbesondere einen BR-PM-Komplex enthält, und wird der Film und/oder das Substrat vorzugsweise in einem Bereich, der das temperaturempfindliche Element enthält, einer Temperatur von höchstens 100 °C, besser höchstens 95 °C, bevorzugt höchstens 90 °C, besonders bevorzugt höchstens 80 °C ausgesetzt, während er in einem Bereich, der das temperaturempfindliche Element nicht enthält, einer Temperatur von mindestens 110 °C, bevorzugt mindestens 120 °C, je nach Anwendung auch mehr als 140 °C, 160 °C oder gar mehr als 180 °C ausgesetzt wird.

Gemäss einem weiteren Aspekt bezieht sich die vorliegende Erfindung auf ein Dokument, das ein Substrat und einen damit durch Lamination verbundenen Film aufweist, wobei das Dokument nach dem vorstehend angegebenen Verfahren hergestellt wurde.

Die Erfindung ermöglicht die Herstellung eines Dokuments, das ein Substrat und einen damit durch Lamination verbundenen Film aufweist, wobei der Film und/oder das Substrat mindestens ein temperaturempfindliches Element aufweist. Dabei sind das Substrat und der Film in einem Bereich, der das temperaturempfindliche Element enthält, andersartig miteinander verbunden als in einem Bereich, der das temperaturempfindliche Element nicht enthält.

Der Begriff "andersartig" ist dabei so zu verstehen, dass er Situationen umfasst, bei denen die Verbindung in den genannten Bereichen zwar durch den gleichen Wirkmechanismus (z.B. gleiches Adhäsiv) hergestellt ist, aber unterschiedlich stark ist (z.B. unterschiedliche Trennkräfte oder unterschiedliche mikrokopische Struktur der Verbindung). Der Begriff umfasst aber auch Situationen, in denen der temperaturempfindliche Bereich völlig anders verbunden ist als der restliche Bereiche, z.B. Anwesenheit eines Adhäsivs nur im temperaturempfindlichen Bereich oder Anwesenheit unterschiedlicher Adhäsive in den unterschiedlichen Bereichen. Insbesondere kann eine Verbindung im Bereich des temperaturempfindlichen Elements auch ganz fehlen. Das temperaturempfindliche Element kann insbesondere ein Sicherheitsmerkmal des Dokuments bilden. Es kann aber auch andere Arten von z.B. optisch auslesbaren Daten tragen. Insbesondere kann das temperaturempfindliche Element ein Retinalprotein, insbesondere Bacteriorhodopsin, enthalten.

Das Dokument kann z.B. eines der folgenden Dokumente sein:
eine Identifikationskarte, ein Führerausweis, eine Gesundheitskarte, eine Wertkarte oder ein anderes kartenförmiges Dokument; oder
ein Reisepass mit mindestens einer Personalisierungsseite, insbesondere mit einer Inhaberseite und/oder mindestens einer Visumsseite, die das Substrat und den Film umfasst.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Passbuch mit Laminations- oder Transferfolie mit bereitstehender Laminationsvorrichtung mit Schlitzzuführung;
- Fig. 2: ein Passbuch mit Laminations- oder Transferfolie mit bereitstehender Laminationsvorrichtung mit beheizter Schubladenzuführung;
- Fig. 3: ein Pilotexemplar einer Laminationsvorrichtung;
- Fig. 4: eine Prinzipskizze zur Aufbringung einer Laminationsfolie;
- Fig. 5: eine Prinzipskizze zur Aufbringung eines Dünnfilms mit anschliessender Entfernung der Trägerfolie;
- Fig. 6: eine Prinzipskizze zur Aufbringung eines Dünnfilms mit anschliessender Entfernung eines silkonisierten Trägers auf Papierbasis;
- Fig. 7: eine Prinzipskizze zum Schichtaufbau einer Laminationsfolie;
- Fig. 8: eine Prinzipskizze zum Schichtaufbau eines Transferfilms;
- Fig. 9: ein aufgeschlagenes Passbuch mit eingenähter Laminationsfolie;
- Fig. 10: ein aufgeschlagenes Passbuch mit eingelegter Transferfolie;
- Fig. 11: eine Prinzipskizze eines mehrschichtigen Dünnfilms oder einer mehrschichtigen Laminationsfolie mit integriertem BR-PM in einer ausgewählten Schicht;
- Fig. 12: eine Prinzipskizze eines Dünnfilms enthaltend BR-PM unmittelbar vor der Lamination auf eine Personalisierungsseite enthaltend BR-PM;
- Fig. 13: eine Matrixanordnung von separat beheizbaren Teilelementen der Heizfläche;
- Fig. 14: eine Bienenwaben-ähnliche Anordnung von separat beheizbaren Teilelementen der Heizfläche;
- Fig. 15: eine Ausführung einer Heizfläche mit Teilelementen in Layout-angepasster Form;
- Fig. 16: eine Ausführung einer Heizfläche mit Teilelementen in Layout-angepasster Form mit umgekehrtem Temperaturverhältnis verglichen mit Fig. 15;
- Fig. 17: eine schematische seitliche Ansicht eines Ausführungsbeispiels für die Heizelemente mit separaten Regelkreisen;
- Fig. 18: eine schematische Ansicht der Rückseite einer Heizfläche, mit einer Vielzahl daran angebrachter Heizelemente in Form von Transistoren, wobei gestrichelte Linien andeuten, dass die Transistoren gleichmässig über die gesamte Rückseite verteilt sind; und
- Fig. 19: einen schematischen Querschnitt des Laminationsraumes mit Heizelementen, Heizfläche, eingeführter Personalisierungsseite, Laminationsfilm/Transferfilm und flexibler Gegenduckfläche.

### BESCHREIBUNG BEVORZUGTER AUSFÜHRUNGSFORMEN

In bevorzugten Ausführungsformen wird die vorliegende Erfindung dazu eingesetzt, eine Folie mit einem Retinalprotein, insbesondere BR-PM, auf eine Substrat aufzubringen. Dazu wird ein Laminationsverfahren vorgeschlagen, das einerseits den Kriterien bezüglich des Delaminationsverhaltens, der optisch sauberen Erscheinung, d.h. einer über die Fläche homogenen Transparenz, Blasenfreiheit, etc. für ein hochgesichertes Sicherheitsdokument wie z.B. einen Reisepass genügt, und das andererseits den Funktionserhalt von zu verwendenden Retinalproteinen, insbesondere BR-PM, gewährleistet. Unter Funktion ist die farbliche Veränderung des Retinalproteins innerhalb einer bestimmten Reaktionszeit bei Bestrahlung mit Licht zu verstehen. Diese Funktion ist eine Vorbedingung für seine Eignung als visuell wahrnehmbares Sicherheitsmerkmal (Erst-/Zweitstufenmerkmal) sowie seine Eignung als optischer Datenspeicher oder Drittstufenmerkmal. Für eine gute Wahrnehmbarkeit des visuellen Merkmals kann, insbesondere in Innenräumen, eine starke Lichtquelle mit einem geeigneten Frequenzanteil, beispielsweise eine LED- oder Halogenquelle, hilfreich sein (in diesem Fall wird das visuelle Merkmal zu einem Zweitstufenmerkmal).

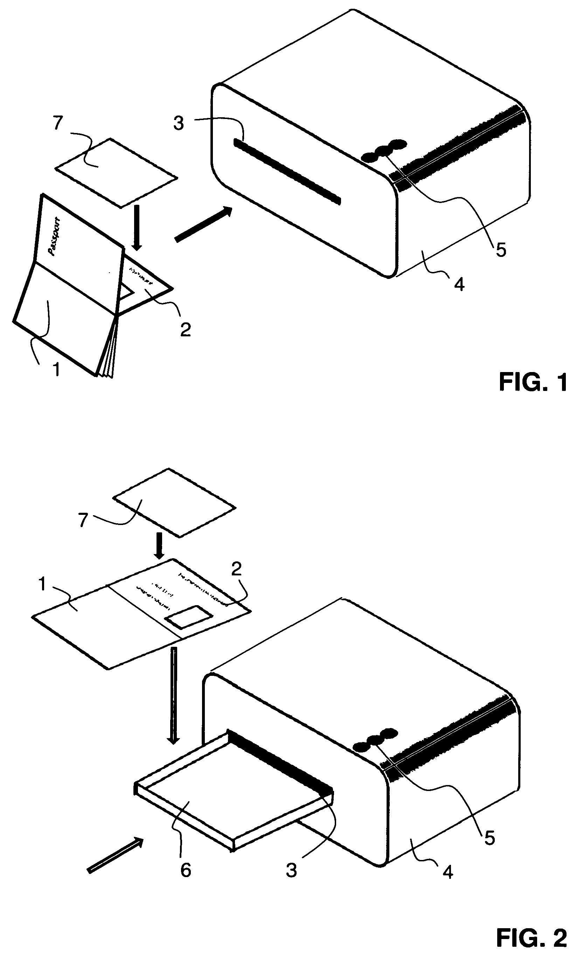

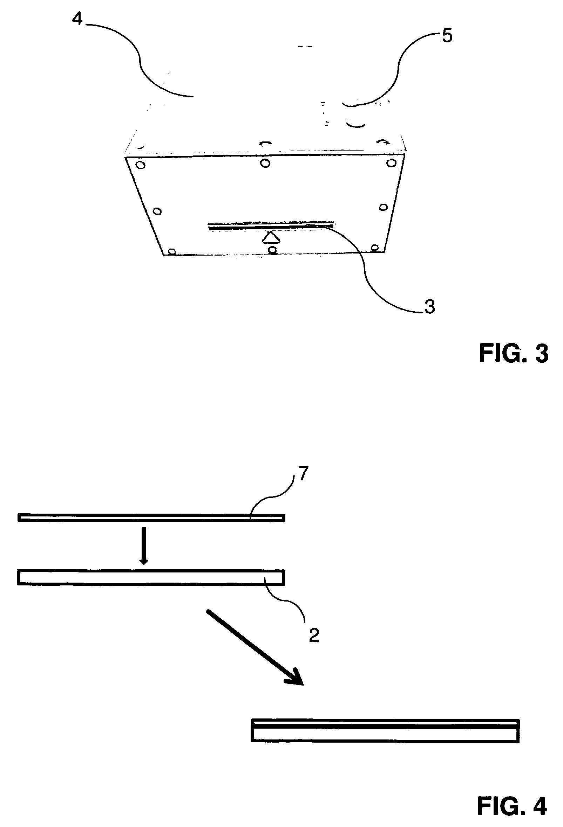

Das Ausführungsbeispiel der Fig. 1 zeigt schematisch einen Laminator 4 mit Bedienelementen 5. Ein Sicherheitsdokument 1 (hier einen Reisepass) enthält eine Personalisierungsseite, die ein Substrat 2 bildet. Die Personalisierungsseite wird in einen Zuführungsschlitz 3 eingeführt. Ein Prototyp dieser Bausweise ist auch in der Fig. 3 gezeigt. In der Fig. 2 ist schematisch eine Variante illustriert, die eine ausfahrbare Heizfläche aufweist, die in eine Schublade 6 integriert ist. Diese Schublade nimmt das vollständig in korrekter Weise eingelegte Dokument, z. B. einen an der richtigen Stelle aufgeklappten Reisepass mit eingenähter Laminationsfolie, auf. Diese Gerätevariante weist den Vorteil einer leichten Reinigung auf. Zahlreiche weitere Varianten sind denkbar. So ist eine Gerätevariante denkbar, die weitgehend automatisch arbeitet, d. h. die zu laminierenden Dokumente wie z. B. Passbücher in nicht personalisierter Form über eine Fördereinrichtung erhält und nach erfolgter Lamination und gegebenenfalls einer anschliessenden Abtrennung einer Trägerfolie automatisch einem weiteren Verarbeitungsschritt zur Verfügung stellt. Laminatoren dieser und anderer Bauformen sind grundsätzlich aus dem Stand der Technik seit langem bekannt.

Die Fig. 4 illustriert die Aufbringung einer Deckfolie 7 durch "klassische" Lamination. Dies kann unter Einsatz von geeigneten Adhäsiven (insbesondere von temperaturaktivierten Schmelzklebern) oder adhäsivfrei erfolgen. Die verwendeten Deckfolien 7, die durch den Laminationsvorgang aufgebracht werden, bestehen zum Beispiel aus PET, PC, oder PVC und verfügen häufig auf der dem Substrat 2 zugewandten Seite über eine Beschichtung von handelsüblichen Adhäsiven wie z. B. die Degalan-Typen von Evonik-Degussa oder die Beva-Typen von CTS. Bezüglich der Materialauswahl bei den Deckfolien für das vorliegende Verfahren bestehen grundsätzlich keine Einschränkungen gegenüber den marktüblichen Folien. Typische Foliendicken liegen zwischen 5 und 100 µm. Z.B. sind auf dem Markt Folien der Dicke 23 µm erhältlich.

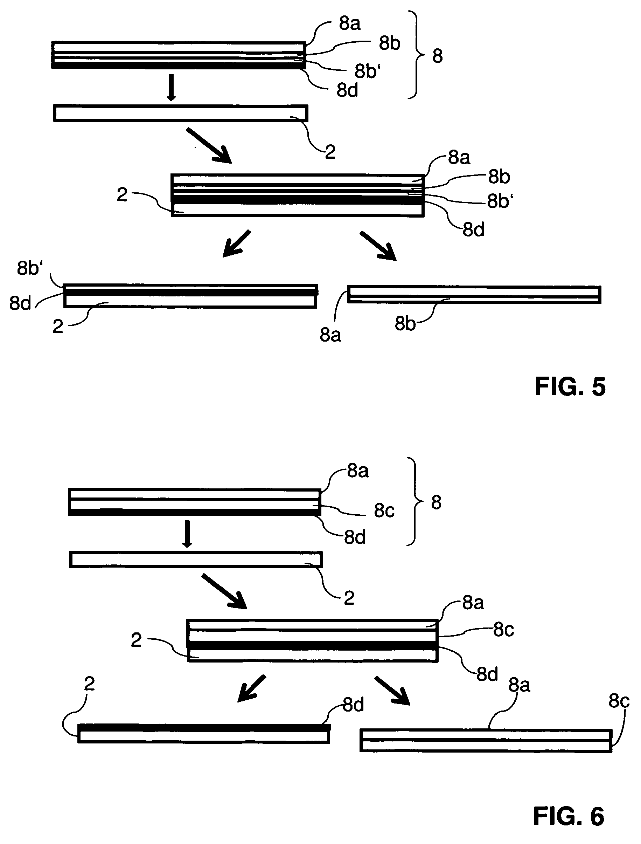

Anstatt Folien für die klassische Lamination können auch sogenannte Transferfolien, d.h. Trägerfolien mit einem darauf getragenen dünnen, ein- oder mehrschichtigen Film ("Dünnfilm"), verwendet werden. Die Trägerfolie wird in diesem Fall nach dem Aufbringen des Dünnfilms auf das Substrat entfernt. Im Fall von Transferfolien sind neben Trägerfolien aus Kunststoff, z.B. aus PET, auch Papierträger mit einer Silikontrennschicht üblich. Der Schichtaufbau einer typischen Transferfolie 8 mit Kunststoffträger ist in der Fig. 5 illustriert. Ein Dünnfilm 8d ist über Zwischenschichten 8b, 8b' mit einem Kunststoffträger 8a verbunden. Beim Abziehen des Trägers 8a verbleibt die Zwischenschicht 8b auf dem Träger, während die Zwischenschicht 8b' ("Release") auf dem Dünnfilm 8d verbleibt, d.h. die Zwischenschichten 8b, 8b' stellen eine saubere Trennung des Dünnfilms vom Träger sicher. Der Schichtaufbau einer typischen Transferfolie 8 mit Papierträger ist in der Fig. 6 illustriert. Hier sind der Träger 8a und der Dünnfilm 8d über eine Silikontrennschicht 8c verbunden, die beim Abziehen auf dem Träger verbleibt. Nach der Lamination und dem Entfernen des Trägers verbleibt demnach ein dünner Film 8d und gegebenenfalls ein Rest einer Zwischenschicht auf dem Substrat.

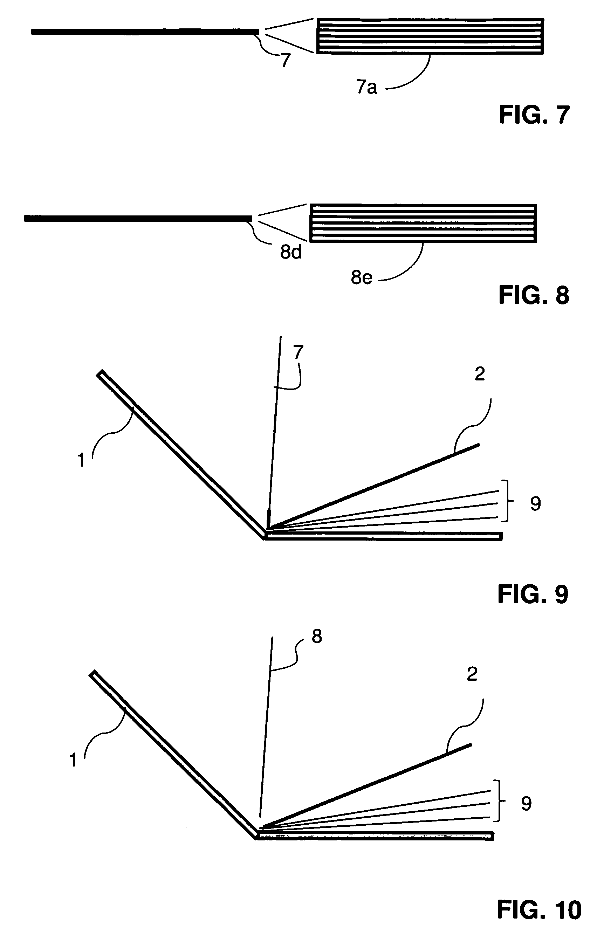

Wie in der Figur 7 illustriert, kann eine Laminationsfolie 7 selbst wiederum aus einer Mehrzahl von Schichten 7a bestehen, wobei diese Schichten aus verschiedenen Materialien bestehen können und unterschiedliche Funktionen erfüllen können. Insbesondere können ausgewählte Schichten Sicherheitsmerkmale tragen. Die unterste Schicht ist häufig eine Adhäsivschicht. Dasselbe gilt, wie in der Fig. 8 illustriert ist, auch für den sogenannten Dünnfilm 8d einer Transferfolie 8, der aus mehreren Schichten 8e bestehen kann.

Ein mögliches Verrutschen der Laminationsfolie im Passbuch wird oft dadurch verhindert, dass die Laminationsfolie vor der Lamination an der entsprechenden Stelle im Buch eingenäht wird. Dies ist in der Fig. 9 illustriert. Die Laminationsfolie ist hier so in das Passbuch 1 eingenäht, dass sie unmittelbar auf die das Substrat 2 bildende Personalisierungsseite aufbringbar ist. Der Personalisierungsseite folgen mehrere weitere Passseiten, z.B. Visumsseiten 9.

Bei Transferfolien muss ein Trägerbestandteil nach erfolgter Lamination wieder entfernt werden. Daher werden Transferfolien 8 hingegen in der Regel lose eingelegt und durch Anschlagkanten im Gerät am Verrutschen gehindert (Fig. 10).

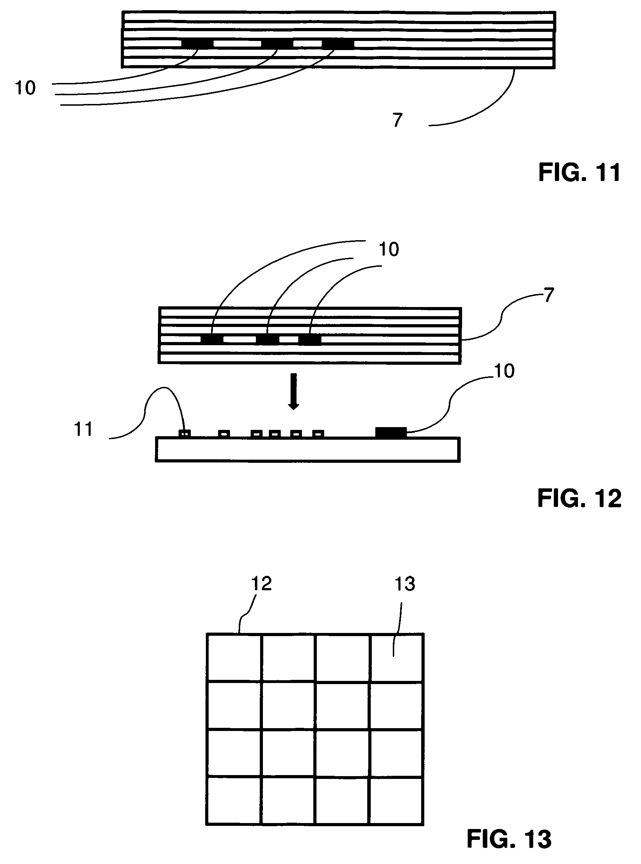

Die Laminationsfolie 7 oder die Transferfolie 8 kann insbesondere eine oder mehrere Schichten mit Sicherheitsmerkmalen auf der Basis von BR-PM aufweisen. Dies ist für den Fall einer Laminationsfolie 7 beispielhaft in der Fig. 11 illustriert. Hier trägt eine der Schichten Sicherheitsmerkmale 10 auf der Basis von BR-PM. Sicherheitsmerkmale 10 auf der Basis von BR-PM können auch zusätzlich oder alternativ auf dem Substrat vorhanden sein, wie dies in der Fig. 12 dargestellt ist. Dabei sind auf dem Substrat in der Regel meist auch noch konventionelle Personalisierungselemente 11 (z.B. Buchstaben und Symbole aus Druckertinte) vorhanden. Unabhängig davon, ob nur auf oder in dem Substrat, nur im aufzubringenden Film oder sowohl auf/in dem Substrat als auch im Film temperaturempfindliche Elemente vorhanden sind, ist es nötig, besondere Massnahmen zu treffen, um eine Zerstörung oder Funktionsbeeinträchtigung dieser Elemente zu vermeiden.

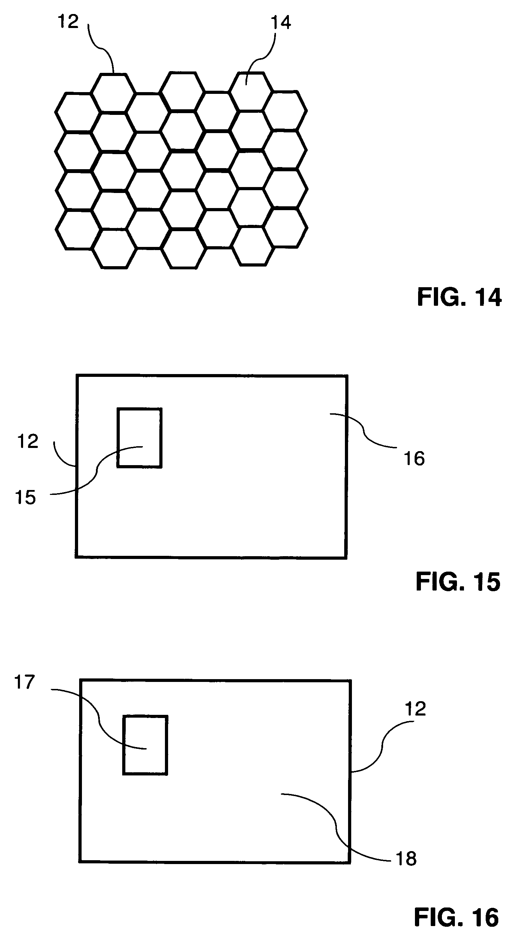

Dazu kann der Laminator eine Heizfläche 12 aufweisen, die so ausgestaltet ist, dass unterschiedliche Teilbereiche dieser Heizfläche durch jeweils separat regelbare Heizelemente beheizbar sind. Die separat beheizbaren Teilbereiche können dazu nach Art einer Matrix angeordnet sein (quadratische oder rechteckige Bereiche 13 der Fig. 13), eine hexagonale Anordnung ("Bienenwabenstruktur") bilden (sechseckige Bereiche 14 der Fig. 14), oder auf beliebige andere regelmässige oder unregelmässige Weise zueinander angeordnet sein. Alle Teilbereiche der Heizfläche grenzen bevorzugt übergangslos aneinander an.

Wie in der Fig. 15 illustriert, kann z.B. ein erster Teilbereich 15 von einem zweiten Teilbereich 16 in der Ebene vollständig umgeben sein. Der erste Teilbereich 15 lässt sich dann gezielt auf eine höhere oder niedrigere Temperatur als der Teilbereich 16 aufheizen. Es ist auch möglich, wie in der Fig. 16 illustriert, in einem oder mehreren Teilbereichen 18 einen oder mehrere Ausschnitte 17 gezielt aus der Heizfläche auszusparen, um dort eine geringere Temperatur zu erreichen.

Das Layout der Teilbereiche kann dem Layout des zu laminierenden Dokuments angepasst sein. So kann beispielsweise ein Ausschnitt des Dokumentes, der ein BR-PM enthaltendes Sicherheitsmerkmal trägt, beispielsweise ein Bild, mit einer niedrigeren Temperatur laminiert werden, während der andere Teilbereich um diesen Ausschnitt herum vollständig und gleichmässig mit einer höheren Temperatur laminiert wird. Damit wird erreicht, dass das BR-PM enthaltende Sicherheitselement während der Lamination keiner Temperatur ausgesetzt ist, die seine Funktion als visuelles Merkmal oder als optischer Datenspeicher einschränkt oder eliminiert. Dabei kann in Kauf genommen werden, dass die gewünschte Funktion des BR-PM enthaltenden Sicherheitselementes vorübergehend bis zu 48 Stunden nach erfolgter Lamination ausbleiben darf.

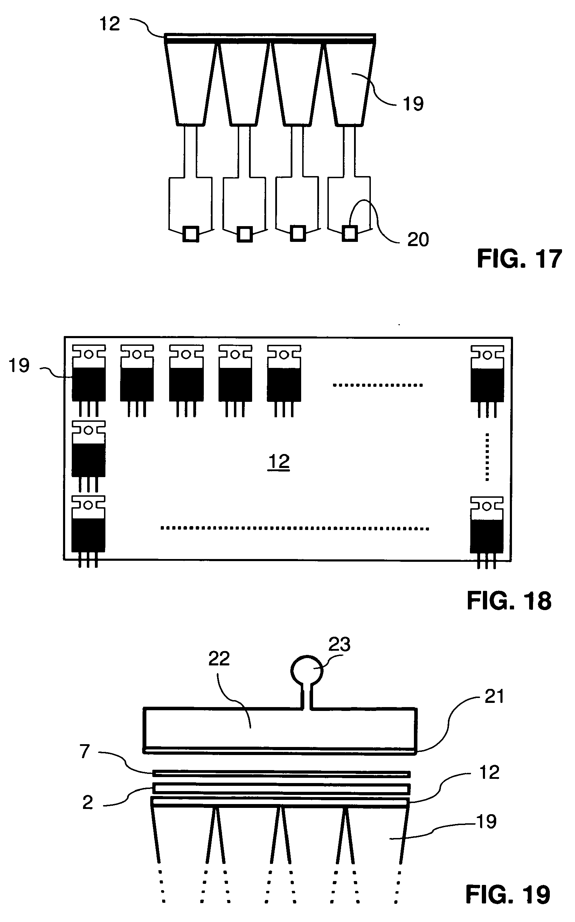

In der Fig. 17 ist illustriert, dass die Heizelemente 19 durch eine Steuerungseinrichtung mit jeweils einem Regelkreis 20 für jedes Heizelement präzise thermostatisierbar sein können. Dazu können entsprechende Temperaturaufnehmer vorgesehen sein. Statt jedes Heizelement 19 einzeln zu regeln, ist es auch denkbar, jeweils mehrere Heizelemente in Gruppen zusammenzufassen und gemeinsam zu regeln. Eine individuelle Regelung ist aber bevorzugt. Die Heizelemente 19 sind vorzugsweise so auf der Rückseite der Heizfläche angeordnet, dass jedes Heizelement den ihm zugeordneten Teilbereich der Heizfläche über seine gesamte Fläche auf eine definierte Temperatur mit minimalem Temperaturgradienten bringen kann. Dazu weist die Heizfläche vorzugsweise eine hohe Wärmeleitfähigkeit auf. Die Heizfläche kann beispielsweise aus eloxiertem Hartaluminium gefertigt sein.

Es hat sich herausgestellt, dass Heizelemente, die als Leistungstransistoren ausgeführt sind, besonders geeignet sind, da sie trägheitsarm reagieren und sehr präzise geregelt werden können. Zudem braucht die Regeleinrichtung nur eine geringe Ausgangsleitung aufzuweisen, da die Leistungen, die zur Ansteuerung des Transistors (am Basisanschluss bei bipolaren Transistoren bzw. Gateanschluss bei FETs) erforderlich sind, im Verhältnis zur abgegebenen Leistung sehr gering sind. In Frage kommt zum Beispiel ein NPN Leistungstransistor BDW93/A/B/C in einem TO-220C Gehäuse (Inchange Semiconductor Company, China) mit einem thermischen Widerstand von 1.5 °C/W. Die Kühlfahne des Transistors ist dann in an sich bekannter Weise unter Einsatz von Wärmeleitmitteln mit der Rückseite der Heizfläche verbunden. Dies ist in der Fig. 18 schematisch illustriert. Eine Vielzahl von Transistoren sind unter Einsatz eines wärmeleitenden Adhäsivs flach an der Rückseite der Heizfläche 12 (d.h. auf derjenigen Seite der Heizfläche, die dem zu laminierenden Objekt abgewandt ist) angebracht. Dabei bilden die Transistoren eine regelmässige Matrix. Die Kollektor- und Emitteranschlüsse der Transistoren sind jeweils mit einem Pol einer Stromversorgung verbunden, während die Basis-Emitter-Strecke über einen Schutzwiderstand durch eine Steuerungseinrichtung mit jeweils einem Regelkreis pro Transistor derart angesteuert wird, dass der betreffende Transistor die Heizfläche auf eine vorbestimmte Temperatur aufheizt. Dazu kann optional im Bereich jedes Transistors ein Temperaturfühler vorhanden sein, oder die elektrischen Eigenschaften des Transistors können selbst zur Temperaturmessung herangezogen werden.

Um ein vollständiges Temperaturgleichgewicht zwischen Heizfläche und der Personalisierungsseite bzw. dem zu laminierenden Teil des Dokumentes zu erreichen, ist eine gewisse Laminationsdauer beim eingestellten Temperaturprofil erforderlich. Diese beträgt je nach Beschaffenheit des Dokumentes 5 Sekunden bis 20 Minuten, um dem Erfordernis der genügenden Haftung des Laminates für hochgesicherte Dokumente zu genügen. Für die Hauptseite eines Passbuches, die die persönlichen Daten des Passinhabers trägt, beträgt diese Zeit bevorzugt 30 Sekunden bis 15 Minuten, besonders bevorzugt 5 Minuten bis 12 Minuten. Eine längere Laminationsdauer ist natürlich möglich, aber im Sinne einer wirtschaftlichen Handhabung nicht bevorzugt.

Die der Heizfläche gegenüberliegende Gegendruckfläche braucht nicht notwendigerweise beheizt zu sein. In einer bevorzugten Ausführungsform ist diese Gegendruckfläche (Oberseite) mit einem flexiblen Material (beispielsweise Weich-PVC, PP/EPDM, PU, TPE-E, oder Kautschuk, mit oder ohne Textileinlage) ausgeführt, das auf der Seite, die der Heizfläche abgewandt ist, mit einem Druck beaufschlagt wird. So erhält die Gegendruckfläche eine einstellbare Härte und kann sich aufgrund ihrer anschmiegsamen Oberfläche einer nicht vollständig ebenen Oberfläche des Laminations- oder Transferfilms anpassen. Die schmiegsame Oberseite gewährleistet also einen Höhenausgleich einer unregelmässig geformten Oberseite der zu laminierenden Schichten. Diese kann z.B. durch eine unregelmässig texturierte Oberfläche des Substrats oder beispielsweise durch weitere auftragende Sicherheitselemente wie integrierte RFID-Chip, optisch diffraktive, interferenzerzeugende Elemente oder Sicherheitsaufdrucke bedingt sein. Eine unregelmässige Oberfläche kann sich auch durch eine unregelmässige Dicke des aufzubringenden Films ergeben, wie dies ist oft der Fall ist, wenn der Film mit Sicherheitsmerkmalen mit einer eigenen Raumbeanspruchung versehen ist, z.B. bei teilflächigen Aufdrucken von Retinalprotein enthaltenden Sicherheitselementen. Durch die schmiegsame Gegendruckfläche wird ein gleichmässiger Druck und Wärmeübergang gewährleistet.

In einer bevorzugten Ausführungsform, die in der Fig. 19 schematisch illustriert ist, wird für die Einstellung des Drucks auf die Gegendruckfläche ein pneumatisches System mit Pressluft verwendet (Gegendruckfläche 21, pneumatische Druckkammer 22, Kompressor 23). Alternativ ist statt einem pneumatischen Betrieb auch ein hydraulischer Betrieb denkbar. Die durch den pneumatischen bzw. hydraulischen Druck hervorgerufene Vorspannung der flexiblen Oberseite 21 bewirkt neben der schon erwähnten Höhenanpassung, dass der Druck von den heisslaminierten Partien zu den nicht laminierten Partien nicht zu schnell abfällt und damit keine unschönen Kanten im Bild des fertig laminierten Dokumentes entstehen, Lufteinschlüsse und Blasenbildung vermieden werden und eine ausreichende Haftung der Folie auch in Bereichen reduzierter Temperatur erzeugt wird.

Die Grenztemperatur für den Funktionserhalt des BR-PM kann durch eine geeignete Formulierung der BR-PM enthaltenden Zubereitung erhöht werden. Formulierungen dieser Art können auf mikroverkapselten BR-PM-Molekülen beruhen, wie sie in der WO-A1-2010/124908 beschrieben sind, und können eine Laminationstemperatur an den Bacteriorhodopsin enthaltenden Stellen bis 95°C unter Funktionserhalt des Bacteriorhodopsins erlauben.

Insgesamt lassen sich auf diese Weise hochgesicherte Dokumente mit temperaturempfindlichen Sicherheitsmerkmalen herstellen, deren Eigenschaften höchsten Anforderungen an Manipulations- und Fälschungssicherheit genügen.

Während die Erfindung anhand von bevorzugten Ausführungsbeispielen erläutert wurde, ist die Erfindung keineswegs auf diese Beispiele beschränkt. So ist es auch denkbar, die Erfindung an völlig andersartig aufgebauten Laminatoren umzusetzen. Insbesondere sind Anwendungen denkbar, die eine geringere Sicherheit und damit auch nur eine kürzere Laminationszeit erfordern. Hierfür kann ein Laminator bereitgestellt werden, bei dem die Heizfläche walzenförmig ist und Substrat und Film gemeinsam zwischen dieser Heizwalze und einer Gegenwalze hindurchgeführt werden, um Substrat und Film aufzuheizen. In diesem Fall kann die Heizwalze mit mehreren Heizelementen versehen sein, die quer zur Bewegungsrichtung von Substrat und Film versetzt zueinander in der Walze angeordnet sind und getrennt ansteuerbar sind, um ein bestimmtes Temperaturprofil quer zur Bewegungsrichtung zu erzeugen. Auch hier ist es denkbar, die Heizelemente so anzuordnen, dass die unterschiedlich beheizbaren Bereiche auf der Oberfläche der Walze ein bestimmtes zweidimensionales Muster bilden. Eine Vielzahl weiterer Abwandlungen sind möglich.

### BEZUGSZEICHENLISTE

- 1: Sicherheitsdokument
- 2: Substrat
- 3: Einführungsschlitz
- 4: Laminationsvorrichtung
- 5: Bedienungselemente
- 6: Schublade mit beheiztem Boden
- 7: Laminationsfolie
- 7a: Schicht
- 8: Transferfolie
- 8a: Träger
- 8b: Rest Release verbleibend auf Folienträger
- 8b': Rest Release verbleibend auf Dünnfilm
- 8c: Silikontrennschicht
- 8d: Dünnfilm
- 8e: Schicht
- 9: Visumsseite
- 10: Element enthaltend Retinalprotein
- 11: Element einer konventionellen Personalisierung
- 12: Heizfläche
- 13: Teilbereich in quadratischer Form
- 14: Teilbereich in hexagonaler Form
- 15: Teilbereich als Bildausschnitt
- 16: Teilbereich in komplementärer Form
- 17: Ausschnitt
- 18: Teilbereich in zum Ausschnitt 17 komplementärer Form
- 19: Heizelement
- 20: Regelkreis
- 21: Gegendruckfläche
- 22: Druckkammer
- 23: Kompressor

## Patentansprüche

1. Vorrichtung zum Aufbringen eines Films (7; 8) auf ein Substrat (2) durch Lamination, aufweisend:
eine Heizeinrichtung (12, 19), um den Film aufzuheizen;
eine Anpresseinrichtung (21, 22, 23), um den Film im aufgeheizten Zustand an das Substrat anzupressen; und
eine Steuereinrichtung (20)
wobei die Heizeinrichtung (12, 19) eine Heizfläche (12) zum Erwärmen des Films (7; 8) und/oder des Substrats (2) definiert und dazu ausgebildet ist, unterschiedliche Bereiche des Films (7; 8) und/oder des Substrats (2) gezielt unterschiedlichen Temperaturen auszusetzen, wobei die Heizeinrichtung (12, 19) eine Mehrzahl von Heizelementen (19) umfasst, und wobei die Steuereinrichtung (20) unterschiedliche Heizelemente (19) separat ansteuert, so dass unterschiedliche Bereiche der Heizfläche (12) gezielt mit unterschiedlichen Flächenheizleistungen beaufschlagbar sind,
**dadurch gekennzeichnet, dass** die Steuereinrichtung (20) eine Mehrzahl von unabhängigen Reglern umfasst, um die Leistung unterschiedlicher Heizelemente (19) separat thermostatisch zu regeln.

2. Vorrichtung nach Anspruch 1, wobei die Heizeinrichtung (12, 19) dazu ausgebildet ist, einen ersten Bereich des Films (7; 8) und/oder des Substrats (2) mindestens einer ersten vorbestimmten Temperatur auszusetzen, um den Film (7, 8) im ersten Bereich dauerhaft mit dem Substrat (2) zu verbinden, und einen zweiten Bereich des Films (7; 8) und/oder des Substrats (2) während des Anpressens einer Temperatur auszusetzen, die um mindestens 10 °C, vorzugsweise um mindestens 20 °C niedriger als die erste Temperatur ist.

3. Vorrichtung nach Anspruch 1 oder 2, wobei die Steuereinrichtung (20) die Heizeinrichtung (12, 19) derart ansteuert, dass die Heizfläche (12) in einem ersten Bereich mindestens eine vorbestimmte erste Temperatur aufweist und dass die Heizfläche (12) in einem zweiten Bereich eine Temperatur aufweist, die um mindestens 10 °C, vorzugsweise um mindestens 20 °C niedriger als die erste Temperatur ist.

4. Vorrichtung nach einem der vorhergehenden Ansprüche, wobei die Heizfläche (12) mehrere Bereiche (13; 14; 15, 16; 17, 18) aufweist, wobei jeweils eines oder mehrere der Heizelemente (12) mit jeweils einem dieser Bereiche (13; 14; 15, 16; 17, 18) der Heizfläche (12) zusammenwirkt, um dieses zu beheizen, und wobei die Bereiche (13; 14; 15, 16; 17, 18) in einem regelmässigen zweidimensionalen Muster, insbesondere einem matrixförmigen, trigonalen oder hexagonalen Muster, angeordnet sind.

5. Vorrichtung nach einem der vorhergehenden Ansprüche, wobei die Heizelemente (19) durch Leistungshalbleiter, insbesondere Leistungstransistoren, gebildet sind.

6. Vorrichtung nach einem der vorhergehenden Ansprüche, wobei die Anpresseinrichtung (21, 22, 23) eine der Heizfläche (12) gegenüberliegend angeordnete schmiegsame und vorzugsweise elastische Gegenfläche (21) aufweist.

7. Vorrichtung nach Anspruch 6, wobei die Gegenfläche (21) eine pneumatisch mit Druck beaufschlagbare Druckkammer (22) begrenzt.

8. Verfahren zum Versehen eines Substrats (2) mit einem Film (7; 8) durch Lamination, aufweisend:
Bereitstellen des Substrats (2) und des Films (7; 8);
Anpressen des Films (7; 8) an das Substrat (2) unter Temperatureinwirkung, wobei unterschiedliche Bereiche des Films (7, 8) und/oder des Substrats (2) mittels einer Heizeinrichtung (12, 19) gezielt unterschiedlichen Temperaturen ausgesetzt werden, indem der Film (7; 8) und/oder das Substrat (2) mittels einer durch die Heizeinrichtung (12, 19) definierten Heizfläche (12) erwärmt werden, wobei die Heizeinrichtung (12, 19) eine Mehrzahl von Heizelementen (19) umfasst, und wobei unterschiedliche Heizelemente (19) separat durch eine Steuereinrichtung (20) angesteuert werden, um unterschiedliche Bereiche der Heizfläche (12) gezielt mit unterschiedlichen Flächenheizleistungen zu beaufschlagen,
**dadurch gekennzeichnet, dass** die Leistung unterschiedlicher Heizelemente (19) mittels einer Mehrzahl von unabhängigen Reglern der Steuereinrichtung (20) separat thermostatisch geregelt wird.

9. Verfahren nach Anspruch 8, wobei ein erster Bereich des Films (7; 8) und/oder des Substrats (2) mindestens einer ersten vorbestimmten Temperatur ausgesetzt wird, um den Film (7; 8) im ersten Bereich dauerhaft mit dem Substrat (2) zu verbinden, und wobei ein zweiter Bereich des Films (7; 8) und/oder des Substrats (2) einer Temperatur ausgesetzt wird, die um mindestens 10 °C, vorzugsweise um mindestens 20 °C niedriger als die erste Temperatur ist.

10. Verfahren nach Anspruch 8 oder 9, wobei der Film (7; 8) und/oder das Substrat (2) mindestens ein temperaturempfindliches Element (10) aufweist und der Film (7; 8) und/oder das Substrat (2) derart während des Anpressens in unterschiedlichen Bereichen gezielt unterschiedlichen Temperaturen ausgesetzt wird, dass das temperaturempfindliche Element (10) funktional erhalten bleibt.

11. Verfahren nach Anspruch 10, wobei das temperaturempfindliche Element (10) ein Retinalprotein, insbesondere Bacteriorhodopsin, enthält, und wobei vorzugsweise der Film (7; 8) und/oder das Substrat (2) in einem Bereich, der das temperaturempfindliche Element (10) enthält, einer Temperatur von höchstens 95 °C ausgesetzt wird und in einem Bereich, der das temperaturempfindliche Element nicht enthält, einer Temperatur von mindestens 110 °C ausgesetzt wird.

12. Dokument, umfassend ein Substrat (2) und einen damit durch Lamination verbundenen Film (7; 8), hergestellt nach einem Verfahren nach einem der Ansprüche 8-11.

## Claims

1. An apparatus for applying a film (7; 8) to a substrate (2) by lamination, comprising:
a heating device (12, 19) for heating the film;
a pressing device (21, 22, 23) for pressing the film onto the substrate in the heated state; and
a control device (20),
wherein the heating device (12, 19) defines a heating surface (12) for heating the film (7; 8) and/or the substrate (2) and is configured to selectively expose different regions of the film (7; 8) and/or of the substrate (2) to different temperatures, wherein the heating device (12, 19) comprises a plurality of heating elements (19), and wherein the control device (20) activates different heating elements (19) separately such that different regions of the heating surface (12) can be acted on selectively with different heating powers,
**characterised in that** the control device (20) comprises a plurality of independent controllers in order to separately thermostatically control the power of different heating elements (19).

2. The apparatus according to Claim 1, wherein the heating device (12, 19) is configured to expose a first region of the film (7; 8) and/or of the substrate (2) at least to a first predetermined temperature in order to connect the film (7; 8) in the first region to the substrate (2) in a lasting manner, and to expose a second region of the film (7; 8) and/or of the substrate (2) during the pressing process to a temperature that is at least 10 °C lower, preferably at least 20 °C lower, than the first temperature.

3. The apparatus according to Claim 1 or 2, wherein the control device (20) activates the heating device (12, 19) in such a way that the heating surface (12) in a first region has at least a predetermined first temperature while the heating surface (12) in a second region has a temperature that is at least 10 °C lower, preferably at least 20 °C lower, than the first temperature.

4. The apparatus according to any one of the preceding claims, wherein the heating surface (12) has a plurality of regions (13; 14; 15, 16; 17, 18), wherein in each case one or more of the heating elements (12) cooperates with one of these regions (13; 14; 15, 16; 17, 18) of the heating surface (12) in order to heat said region, and wherein the regions (13; 14; 15, 16; 17, 18) are arranged in a regular two-dimensional pattern, in particular a matrix-like, trigonal or hexagonal pattern.

5. The apparatus according to any one of the preceding claims, wherein the heating elements (19) are formed by power semi-conductors, in particular power transistors.

6. The apparatus according to any one of the preceding claims, wherein the pressing device (21, 22, 23) has a pliant and preferably resilient opposing surface (21) arranged opposite the heating surface (12).

7. The apparatus according to Claim 6, wherein the opposing surface (21) defines a pressure chamber (22) that can be acted on pneumatically with pressure.

8. A method for providing a substrate (2) with a film (7; 8) by lamination, comprising the following steps:
providing the substrate (2) and the film (7; 8);
pressing the film (7; 8) onto the substrate (2) under the action of heat, wherein different regions of the film (7; 8) and/or of the substrate (2) are selectively exposed to different temperatures by means of a heating device (12, 19), the film (7; 8) and/or substrate (2) being heated by a heating surface (12) that is defined by the heating device (12, 19), wherein the heating device (12, 19) comprises a plurality of heating elements (19), and wherein different heating elements (19) are activated separately by a control device (20) to act on different regions of the heating surface (12) selectively with different heating powers,
**characterised in that**
the power of different heating elements (19) is separately thermostatically controlled by a plurality of independent controllers of the control device (20).

9. The method according to Claim 8, wherein a first region of the film (7; 8) and/or of the substrate (2) is exposed at least to a first predetermined temperature in order to connect the film (7; 8) in the first region to the substrate (2) in a permanent manner, and wherein a second region of the film (7; 8) and/or of the substrate (2) is exposed to a temperature that is at least 10 °C lower, preferably at least 20 °C lower, than the first temperature.

10. The method according to Claim 8 or 9, wherein the film (7; 8) and/or the substrate (2) comprises at least one temperature-sensitive element (10), and the film (7; 8) and/or the substrate (2) is selectively exposed to different temperatures during the pressing process in different regions, in such a way that the function of the temperature-sensitive element (10) is retained.

11. The method according to Claim 10, wherein the temperature-sensitive element (10) contains a retinal protein, in particular bacteriorhodopsin, and wherein the film (7; 8) and/or the substrate (2), in a region containing the temperature-sensitive element (10), is preferably exposed to a temperature of at most 95 °C and is exposed in a region not containing the temperature-sensitive element to a temperature of at least 110 °C.

12. A document, comprising a substrate (2) and a film (7; 8) connected thereto by lamination, said document being produced by a method according to one of Claims 8-11.

## Revendications

1. Un dispositif pour l'application d'un film (7; 8) par lamination sur un substrat (2), présentant :
un équipement de chauffage (12, 19) pour chauffer le film ;
un équipement de pressage (21, 22, 23) pour presser le film contre le substrat dans une condition chauffée ; et
un équipement de commande (20) ;
dans lequel l'équipement de chauffage (12, 19) définit une surface de chauffage (12) pour le chauffage du film (7 ; 8) et/ou du substrat (2) et est agencé pour soumettre de manière ciblée différents domaines du film (7 ; 8) et/ou du substrat (2) à des températures différentes, et où l'équipement de chauffage (12, 19) comprend une pluralité d'éléments de chauffage (19), où l'équipement de commande (20) commande différents éléments de chauffage (19) de manière séparée, de sorte que différents domaines de la surface de chauffage (12) peuvent être alimentés avec de différentes puissances calorifiques de surface de manière ciblée, **caractérisé en ce que** l'équipement de commande (20) comprend une pluralité de régulateurs indépendants pour régler séparément la puissance de différents éléments de chauffage (19) de manière thermostatique.

2. Dispositif selon la revendication 1, où l'équipement de chauffage (12, 19) est formé de sorte à exposer un premier domaine du film (7, 8) et/ou du substrat (2) à au moins une première température prédéfinie pour relier le film (7, 8) dans un premier domaine de manière permanente au substrat (2), et exposer un deuxième domaine du film (7,8) et/ou du substrat (2) pendant le pressage à une température qui est inférieure à la première température d'au moins 10 °C, préférablement d'au moins 20 °C.

3. Dispositif selon la revendication 1 ou 2, où l'équipement de commande (20) commande l'équipement de chauffage (12, 19) de sorte que la surface de chauffage (12) présente dans un premier domaine au moins une première température prédéfinie et que la surface de chauffage (12) présente dans un deuxième domaine une température qui est inférieure à la première température d'au moins 10 °C, préférablement d'au moins 20 °C.

4. Dispositif selon une des revendications précédentes, où la surface de chauffage (12) présente plusieurs domaines (13, 14, 15, 16 , 17, 18), où respectivement un ou plusieurs des éléments de chauffage (12) coopèrent respectivement avec un de ces domaines (13, 14, 15, 16, 17, 18) de la surface de chauffage (12), pour chauffer celui-ci, et où les domaines (13, 14, 15, 16, 17, 18) sont disposés dans un motif régulier à deux dimensions, en particulier un motif en forme de matrice, trigonal ou hexagonal.

5. Dispositif selon une des revendications précédentes, où les éléments de chauffage (19) sont formés de semi-conducteurs à puissance, particulièrement de transistors de puissance.

6. Dispositif selon une des revendications précédentes, où l'équipement de pressage (21, 22, 23) dispose d'une contre-surface (21) préférablement élastique et épousant la surface de chauffage (12) disposée du côté opposé.

7. Dispositif selon la revendication 6, où la contre-surface (21) limite une chambre à pression (22) pouvant être alimentée de manière pneumatique avec de la pression.

8. Procédé pour doter un substrat (2) d'un film (7, 8) par lamination, comprenant :
fournir le substrat (2) et le film (7, 8) ;
presser de film (7, 8) contre le substrat (2) sous l'influence de température, où des différents domaines du film (7, 8) et/ou du substrat (2) sont exposés de manière ciblée au moyen d'un équipement de chauffage (12, 19) à des différentes températures, en chauffant le film (7, 8) et/ou le substrat (2) au moyen d'une surface de chauffage (12) définie par l'équipement de chauffage (12, 19), où l'équipement de chauffage (12, 19) comprend le pluralité d'éléments de chauffage (19), et où différents éléments de chauffage (19) sont commandés séparément par un équipement de commande (20), pour alimenter différents domaines de la surface de chauffage (12) de manière ciblée avec des différentes puissances calorifiques de surface
**caractérisé en ce que** la puissance des différents éléments de chauffage (19) est réglée au moyen d'une pluralité de régulateurs indépendants de l'équipement de commande (20) séparément de manière thermostatique.

9. Procédé selon la revendication 8, où un premier domaine du film (7, 8) et/ou du substrat (2) est exposé à au moins une première température prédéfinie, pour relier le film (7, 8) dans un premier domaine de manière permanente avec le substrat (2), et où un deuxième domaine du film (7, 8) et/ou du substrat (2) est exposé à une température inférieure à la première température d'au moins 10 °C, préférablement d'au moins 20 °C.

10. Procédé selon la revendication 8 ou 9, où le film (7, 8) et où le substrat (2) comprend au moins un élément sensible à la température (10) et le film (7, 8) et/ou le substrat (2) est exposé de telle manière à des différentes températures de manière ciblée dans des différents domaines lors du pressage, que l'élément sensible à la température (10) est conservé de manière fonctionnelle.

11. Procédé selon la revendication 10, où l'élément sensible à la température (10) comprend une protéine à rétinal, en particulier de la bactériorhodopsine, et/ou préférablement le film (7, 8) et/ou le substrat (2) est exposé à une température d'au maximum 95 °C dans un domaine qui comprend l'élément sensible à la température (10) et est exposé à une température d'au moins 110 °C dans un domaine qui ne comprend pas l'élément sensible à la température.

12. Document, comprenant un substrat (2) et un film (7, 8) relié à celui-ci par lamination, produit selon le procédé d'une des revendications 8 à 11.
